# EUROPÄISCHE PATENTSCHRIFT

(11) **EP 3 546 887 B1**
(45) Veröffentlichungstag und Bekanntmachung des Hinweises auf die Patenterteilung: **10.05.2023**
(21) Anmeldenummer: 19161311.6
(22) Anmeldetag: 07.03.2019
(51) Int. Cl.: G01C 21/36

(54) **VERFAHREN ZUR ANPASSUNG DER BEDIENUNG EINES FAHRZEUGSTEUERUNGSSYSTEMS, VORRICHTUNG ZUR VERWENDUNG BEI DEM VERFAHREN SOWIE KRAFTFAHRZEUG UND COMPUTERPROGRAMM**
METHOD FOR ADJUSTING THE OPERATION OF A VEHICLE, DEVICE FOR USE IN THE PROCESS, MOTOR VEHICLE AND COMPUTER PROGRAM
PROCÉDÉ D'AADAPTATION DU FONCTIONNEMENT D'UN SYSTÈME DE COMMANDE DE VÉHICULE, DISPOSITIF DESTINÉ À L'UTILISATION DANS LEDIT PROCÉDÉ AINSI QUE VÉHICULE AUTOMOBILE ET PROGRAMME INFORMATIQUE

(30) Priorität: 28.03.2018 DE 102018204750
(43) Veröffentlichungstag der Anmeldung: 02.10.2019
(73) Patentinhaber: VOLKSWAGEN AKTIENGESELLSCHAFT, 38440 Wolfsburg (DE)
(72) Erfinder: AMINEV, Timur, 38122 Braunschweig (DE)

(56) Entgegenhaltungen:
- EP-A2- 1 069 496
- WO-A2-2004/008305
- US-A1- 2013 311 913
- US-A1- 2016 173 568

## Beschreibung

Die Erfindung betrifft das technische Gebiet der Bedienung von Fahrzeugsteuerungssystemen. Heute werden vielfältige Fahrzeugsteuerungssysteme in Kraftfahrzeugen eingesetzt. Die Erfindung betrifft weiterhin eine entsprechend ausgelegte Vorrichtung zur Verwendung bei dem Verfahren sowie ein Kraftfahrzeug und ein Computerprogramm.

Zur Zeit wird intensiv an Technologien gearbeitet, die später ein autonomes Fahren ermöglichen sollen. Ein erster Ansatz ist dabei, den Fahrer nicht komplett von seinen Aufgaben zu entlasten, sondern ihm zu assistieren. Der Fahrer nimmt außerdem Überwachungsfunktionen wahr.

Es gibt vielfältige Fahrzeugsteuerungssysteme im Kraftfahrzeugbereich, aber sicher auch in anderen Fahrzeugbereichen. Hierbei stehen oft Sicherheitsaspekte, aber auch die Steigerung des Fahrkomforts im Vordergrund. Ein weiterer Aspekt ist die Verbesserung der Wirtschaftlichkeit. Als Beispiele von Fahrerzeugsteuerungssystemen werden insbesondere die folgenden Fahrerassistenzsystemen genannt:
- Automatische Distanzregelung ACC
- Spurhalteassistent
- Spurwechselassistent
- Notbremsassistent
- Stauassistent
- Lichtassistent

Neben solchen Fahrerassistenzsystemen gibt es auch Fahrzeugsteuerungssysteme, bei denen eine Einstellung über Bedienmenüs möglich ist. Als Beispiel wird genannt, ein Fahrwerkregelungssystem bei dem verschiedene Fahrmodi ausgewählt werden können.

Folgende Lösungen in diesem Bereich sind dabei schon aus dem Stand der Technik bekannt.

Aus der DE 10 2011 111 213 A1 ist ein Verfahren und eine Vorrichtung zur Ausgabe von Informationen über ein Fahrzeug bekannt. Die Komplexität moderner Fahrzeuge nimmt immer mehr zu. Die Fahrer kennen oft nicht alle Funktionen des Fahrzeuges und sind deshalb nicht in der Lage, das bereitgestellte Potential des Fahrzeuges vollumfänglich zu nutzen. Nach der Lösung in dem Dokument wird die Arbeitsbelastung des Fahrers ermittelt, und es wird zu jeder Information, die an den Fahrer gerichtet ist, eine Priorität vergeben. Bei einer gegebenen Arbeitsbelastung werden nur solche Informationen ausgegeben, die eine gewisse Priorität überschreiten. Die vergebenen Prioritäten sind in Abhängigkeit des Fahrzeug-Bedienungsverhaltens des Fahrers veränderbar.

Aus der DE 10 2016 008 875 A1 ist ein Verfahren zum Betrieb eines Fahrzeuges bekannt. Bei dem Verfahren kann ein Fahrzeugeigentümer oder -besitzer auf Anforderung sich eine Fahrzeugfunktion zur Benutzung freischalten lassen.

Aus der US 2003 / 0018428 A1 ist ein Fahrzeug-Informationssystem bekannt. Zur Navigation des Fahrzeuges wird über das Kommunikationsmodul des Fahrzeuges mit einem externen Server kommuniziert, der die Navigationsroute berechnet und an das Fahrzeug übermittelt. Ein Karten-Update kann zum Fahrzeug ebenfalls übermittelt werden.

Aus dem Dokument US 2013 / 311 913 A1 ist es bekannt bei einem Gerät der Unterhaltungselektronik das Bedienmenü zu verändern, indem eine Statistik aufgestellt wird, welche Bedienmenüpunkte häufig eingestellt werden. Ausgehend von der Statistik, wird das Bedienmenü angepasst, so dass häufig verwendete Bedienmenüpunkte schneller zugänglich werden. Dabei wird die Statistik an einen externen Server gesendet. Die Auswertung der Statistik und die Anpassung des Bedienmenüs erfolgt bei dem Server. Von dem Server wird dann die Information an das Unterhaltungselektronikgerät zurück gesendet welche Veränderungen bei dem Bedienmenü eingestellt werden sollen.

Aus dem Dokument US 2016 / 173 568 A1 sind Methoden und Systeme für die Verwaltung des Zugriffs auf ein Benutzerkonto mit einem Benutzerprofil bekannt, das Einstellungen für ein Fahrzeug enthält. Das Computersystem des Fahrzeugs ist so konfiguriert, dass es über ein drahtloses Kommunikationssystem eine Verbindung mit einem externen Server herstellt. Der Server greift auf das Profil des Benutzerkontos zu und das Computersystem des Fahrzeugs, um das Benutzerprofil zu verwenden. Das Computersystem des Fahrzeugs ist so konfiguriert, die Nutzungsaktivität des Fahrzeugs zu überwachen. Die Nutzungsaktivität des Fahrzeugs umfasst Eingaben, die von Benutzerschnittstellen des Fahrzeugs empfangen werden. Die Daten bezüglich der Nutzungsaktivität des Fahrzeugs werden an den Server übermittelt, o eine Auswertung erfolgt. Dabei kann das Computersystem des Fahrzeugs Daten von dem Server empfangen, die verwendet werden, um eine Empfehlung für eine Änderung einer Einstellung im Fahrzeug abzugeben. Die Empfehlung wird auf dem Bildschirm des Fahrzeugs angezeigt. Der Benutzer muss die Annahme der Änderung der Einstellung bestätigen. Die Änderung der Einstellung wird dem Benutzerprofil dann hinzugefügt.

Aus dem Dokument EP 1 069 496 A2 ist eine multifunktionale Anzeige- und Bedieneinrichtung bekannt. Dabei werden Präferenzen von Bedienmenüpunkt-Einstellungen erfasst, wobei in Abhängigkeit der Präferenzen zumindest eine Bedien- oder Menüstruktur und/oder mindestens eine Auswahlliste modifiziert wird und somit die auf der Anzeigeeinrichtung präferierten Eingaben und Einstellungen an exponierter Stelle dargestellt werden. Durch die Auswertung der Historie erfolgt somit eine dynamische Anpassung der Bedienmenüpunkt-Darstellungen an die Benutzergewohnheiten eines Nutzers.

Für den Nutzer ist es schwierig, die Übersicht zu behalten, welche Einstellmöglichkeiten das Fahrzeug hat und in dieser Vielfalt von Einstellungsmöglichkeiten die gewünschte Option zu finden. Die Bedienung der verschiedenen Fahrzeugsteuerungssysteme erfolgt meist über eine Benutzerschnittstelle, die sich einer grafischen Benutzeroberfläche in Form von Bedienmenüs angezeigt auf einer Anzeigeeinheit bedient. Wenn der Fahrer eine Einstellung während der Fahrt verändern möchte, besteht ein hohes Ablenkungspotenzial, wenn die Einstellmöglichkeiten in der konventionellen Form dargeboten werden. Diese Probleme wurde im Rahmen der Erfindung erkannt.

Es besteht also der Bedarf für weitere Verbesserungen bei der Bedienung der vielfältigen Steuerungssystem eines Fahrzeuges über das Infotainment-System.

Die Erfindung stellt sich zur Aufgabe, die Bedienung von Steuerungssystemen eines Fahrzeuges für den Fahrer zu vereinfachen.

Diese Aufgabe wird durch ein Verfahren zur Anpassung der Bedienung eines Fahrzeugsteuerungssystems, gemäß Anspruch 1, eine Vorrichtung zur Verwendung bei dem Verfahren gemäß Anspruch 4 sowie ein Kraftfahrzeug gemäß Anspruch 7 und ein Computerprogramm gemäß Anspruch 8 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung gemäß des erfindungsgemäßen Verfahrens zur Anpassung der Bedienung eines Fahrzeugsteuerungssystems besteht in den folgenden Schritten: Die Bedienung erfolgt mit ein oder mehreren Bedienmenüs einer Benutzerschnittstelle, die auf einer Anzeigeeinheit dargestellt werden. Es wird eine Statistik aufgestellt, welche Menüeinstellungen der Nutzer wenigstens in einer bestimmten Zeit vorgenommen hat. Die Statistik wird in einer Speichereinheit des Fahrzeuges abgespeichert. Die Statistik wird zu einer externen Verwaltungseinheit übertragen. Dann wird die Statistik in der Verwaltungseinheit ausgewertet. Schließlich wird in Abhängigkeit davon ein individuell auf die Bedürfnisse des Fahrers angepasstes Software-Update für ein Programm des Fahrzeugsteuerungssystems erstellt. Diese wird an das Fahrzeug übertragen und in dem Fahrzeug neu installiert. So bekommt der Fahrer ein auf seine individuellen Bedürfnisse angepasstes Software-Update.

Dabei ist es vorteilhaft, wenn die individuelle Anpassung durch die Veränderung der Anordnung der Bedienmenüpunkte erfolgt, derart, dass Bedienmenüpunkte, die der Fahrer laut Statistik häufig benutzt hat, im Bedienmenü an leicht zugänglicher Stelle positioniert werden, während wenig oder gar nicht benutzte Bedienmenüpunkte an anderer Stelle positioniert werden, wo sie schlechter zugänglicher sind.

Eine vorteilhafte Variante besteht darin, die an weniger leicht zugänglicher Stelle positionierten Bedienmenüpunkte in einem Untermenü zu positionieren.

Ebenfalls vorteilhaft ist, wenn in der Statistik außer der Häufigkeit der Benutzung auch die jeweils gewählten Einstellungswerte erfasst werden. Dies ist für eine tiefergehende Analyse der typischen vom Fahrer gewünschten Einstellungen des Fahrzeugsteuerungssystems vorteilhaft.

Dafür ist es ebenfalls vorteilhaft, wenn in der Statistik außer der Häufigkeit der Benutzung auch die Fahrsituation, in der die Einstellung vorgenommen wurde, erfasst wird.

Eine vorteilhafte Variante besteht darin, durch die individuelle Anpassung seitens des Fahrers das über die Statistik erfasste Verhalten des Fahrers zu lernen, so dass die gelernten Einstellungen des Fahrers bei den betreffenden Fahrsituationen zukünftig automatisch gewählt werden, ohne dass der Fahrer diese Einstellungen selbst auswählen muss. Der Fahrer muss diese Einstellungen selbst nicht mehr vornehmen und wird dadurch entlastet.

Für eine Vorrichtung zur Verwendung bei dem Verfahren ist es vorteilhaft, wenn sie eine Anzeigeeinheit und eine Recheneinheit mit einer Speichereinheit, wenigstens ein Fahrzeugsteuerungssystem und ein Kommunikationsmodul aufweist. Die Recheneinheit wird ausgelegt, die Nutzereinstellungen bzgl. des wenigstens einen Fahrzeugsteuerungssystems in einer Statistik zu erfassen und in der Speichereinheit zu speichern. Des Weiteren wird die Recheneinheit weiter so ausgelegt, die Statistik über das Kommunikationsmodul zu einer externen Verwaltungseinheit zu senden und von dort ein an die übertragene Statistik angepasstes Software-Update zu empfangen und auf der Recheneinheit zu installieren. Mit dieser Vorrichtung, die im Fahrzeug leicht in bestehende Komponenten integriert werden kann, ist es möglich, dass der Fahrer ein auf seine individuellen Bedürfnisse angepasstes Software-Update bekommen kann.

Weiterhin vorteilhaft ist, wenn die Recheneinheit programmierbar ausgelegt ist und der Zeitraum für die Erfassung der Statistik programmierbar ist. Der Nutzer hat dadurch die Möglichkeit, die Statistik für eine bestimmte Situation zeitlich zuzuschneiden. Ein Beispiel wäre eine längere Urlaubsreise, wo der Fahrer sich mehr Zeit nehmen kann die Einstellungen für bestimmte Straßenverhältnisse und Fahrsituationen individuell einzustellen.

In vorteilhafter Weise ist die Anzeigeeinheit eine berührungsempfindliche Anzeigeeinheit (Touchscreen), über die die Einstellungen in den Bedienmenüs vorgenommen werden kann.

Im Übrigen gelten für die Vorrichtung zur Durchführung des Verfahrens mit der entsprechend programmierten Recheneinheit die gleichen Vorteile, wie bei den Ansprüchen mit den entsprechenden Verfahrensschritten erwähnt.

In vorteilhafter Weise kann die erfindungsgemäße Vorrichtung in einem Kraftfahrzeug eingesetzt werden. Im Fahrzeug wird die Erfindung vorzugsweise so realisiert, dass die Anzeigeeinheit im Fahrzeug fest installiert ist, zum Beispiel in Form berührungsempfindlichen Anzeigeeinheit. Trotzdem wäre eine mögliche Realisierungsform auch mit Hilfe einer Datenbrille möglich, wenn der Einsatz der Datenbrille beim Fahrer in Zukunft erlaubt wäre. Für ein Computerprogramm, das in der Recheneinheit der erfindungsgemäßen Vorrichtung zur Abarbeitung kommt, um Schritte des erfindungsgemäßen Verfahrens durchzuführen, gelten die entsprechenden Vorteile wie zu dem erfindungsgemäßen Verfahren beschrieben.

Ausführungsbeispiele der Erfindung sind in den Zeichnungen dargestellt und werden nachfolgend anhand der Figuren näher erläutert.

Es zeigen:
- Fig. 1: das typische Cockpit eines Fahrzeuges;
- Fig. 2: ein Blockdiagramm des Fahrzeugnetzwerkes mit den verschiedenen vernetzten Steuergeräten des Fahrzeuges;
- Fig. 3: das Prinzip der Fahrzeugkommunikation über Mobilfunk;
- Fig. 4: die Normalansicht des Bedienmenüs "Einstellungen" bei einem Fahrerassistenzsystem zur automatischen Abstandsregelung;
- Fig. 5: das Bedienmenü "Einstellungen" nach individueller automatischer Anpassung; und
- Fig. 6: das Bedienmenü "Einstellungen" bei einem Fahrerassistenzsystem zur automatischen Fahrwerkseinstellung.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

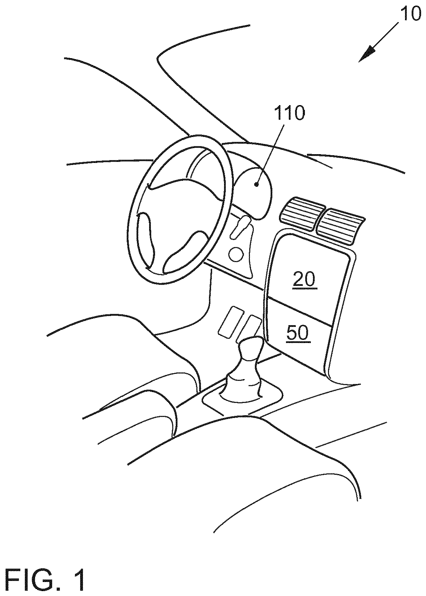

Fig. 1 zeigt das typische Cockpit eines Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind Busse, Nutzfahrzeuge, insbesondere Lastkraftwagen Lkw, Landmaschinen, Baumaschinen, Schienenfahrzeuge usw.. Der Einsatz der Erfindung wäre allgemein bei Landfahrzeugen, Schienenfahrzeugen, Wasserfahrzeugen und Luftfahrzeugen möglich.

In dem Cockpit ist eine Anzeigeeinheit eines Infotainment-Systems mit Bezugszeichen hervorgehoben. Es handelt sich um einen berührungsempfindlichen Bildschirm 20, der in der Mittelkonsole angebracht ist.

Der berührungsempfindliche Bildschirm 20 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 20 benutzt, wobei dieser Bildschirm 20 insbesondere von einem Fahrer des Fahrzeugs 10, aber auch von einem Beifahrer des Fahrzeugs 10 gut eingesehen und bedient werden kann. Unterhalb des Bildschirms 20 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainmentsystems möglich. Dafür sind die Fahrzeuge mit einer sogenannten Multifunktionslenkrad-Bedienung ausgestattet. Diese Einheit ist nicht separat dargestellt, sondern wird als Teil der Eingabeeinheit 50 betrachtet.

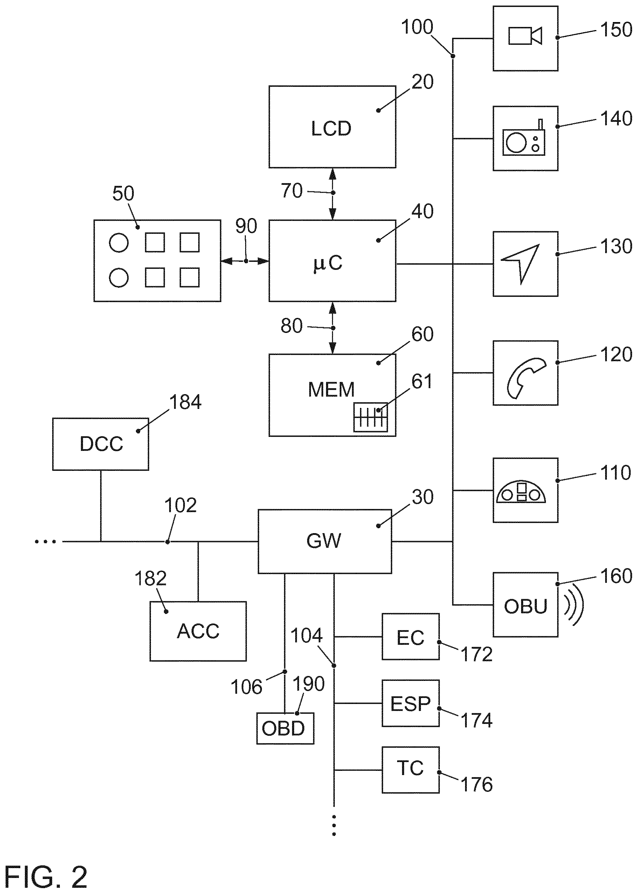

Fig. 2 zeigt schematisch ein Blockschaltbild des Infotainment-Systems 200 sowie beispielhaft einige Teilsysteme oder Applikationen des Infotainment-Systems. Die BedienungsVorrichtung umfasst die berührungsempfindliche Anzeigeeinheit 20, eine Recheneinrichtung 40, eine Eingabeeinheit 50 und einen Speicher 60. Die Anzeigeeinheit 20 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 20 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 20 Steuerdaten zum Ansteuern der Anzeigefläche des Touchscreens 20 von der Recheneinrichtung 40. Über die Datenleitung 70 werden auch Steuerdaten der eingegebenen Befehle von dem Touchscreen 20 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw..

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für die möglichen Einblendungen von Zusatzinformationen. Hier können auch die Punkte / Symbole abgelegt sein, die für die Berechnung der Raster-Einblendung als Grundlage dienen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie IEEE 802.03cg in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch RADAR- oder LIDAR-Systeme, entsprechend Radio Detection and Ranging und Light Detection and Ranging ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

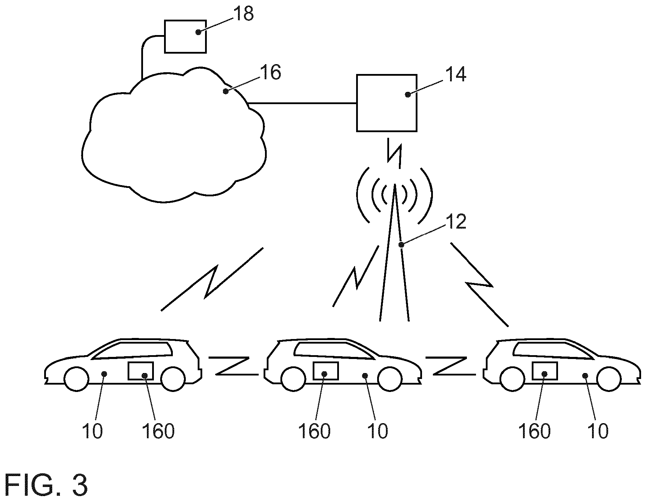

FIG. 3 zeigt das Prinzip der Fahrzeug-Kommunikation. Jedes Fahrzeug 10 ist mit dem schon erwähnten Kommunikationsmodul 160 ausgestattet, das als Empfangs- und Sendeeinheit für die Kommunikation in einem Mobilfunknetz dient. Eine Mobilfunk-Basisstation ist dargestellt und mit Bezugszahl 12 bezeichnet.

Das Fahrzeug 10 entspricht hierbei aufgrund des integrierten Kommunikationsmoduls 160 einer Mobilfunknetz-Teilnehmerstation. Alle Nachrichten von den Fahrzeugen (Uplink) und zu den Fahrzeugen (Downlink) werden entweder über die Basisstation 12 geleitet, die eine Mobilfunkzelle versorgt oder im Fall der Fahrzeug-Direktkommunikation (Sidelink) direkt zwischen den Fahrzeugen 10 ausgetauscht. Wenn sich die Fahrzeuge 10 innerhalb dieser Mobilfunkzelle befinden, werden sie bei der Basisstation 12 registriert oder angemeldet. Wenn sie die Mobilfunkzelle verlassen, werden sie an die nächste Basisstation 20 übergeben und dementsprechend an der Basisstation 20 abgemeldet. Die Basisstation 20 stellt auch einen Zugang zum Internet 16 bereit, so dass die Fahrzeuge 10 oder alle anderen Mobilfunkteilnehmer in der Mobilfunkzelle mit Internetdaten versorgt werden. Zu diesem Zweck ist die Basisstation 12 über die sogenannte S1-Schnittstelle mit dem EPC 14 (Evolved Packet Core) verbunden. Ein zentraler Backend-Server 18 ist auch über das Internet 16 oder ein anderes Weitbereichsnetzwerk WAN zugänglich. Dieser Backend-Server 18 wird z.B. von dem Kraftfahrzeughersteller unterhalten, was nachfolgend noch genauer erläutert wird.

Solche Mobilfunktechnologien sind standardisiert und es wird hier auf die entsprechenden Spezifikationen von Mobilfunkstandards verwiesen. Als modernes Beispiel für einen Mobilfunkstandard wird auf die 3GPP-Initiative und den LTE-Standard (Long Term Evolution) verwiesen. Viele der zugehörigen ETSI-Spezifikationen sind derzeit in der Version 14 verfügbar. Als Beispiel aus Version 13 wird folgende Spezifikation genannt: ETSI TS 136 213 V13.0.0 (2016-05); Evolved Universal Terrestrial Radio Access (E-UTRA); Physical layer procedures (3GPP TS 36.213 Version 13.0.0 Release 13).

Das erfindungsgemäße Verfahren zur Anpassung der Menüführung zur Bedienung eines Fahrerassistenzsystems wird im Folgenden anhand von zwei Ausführungsbeispielen erläutert.

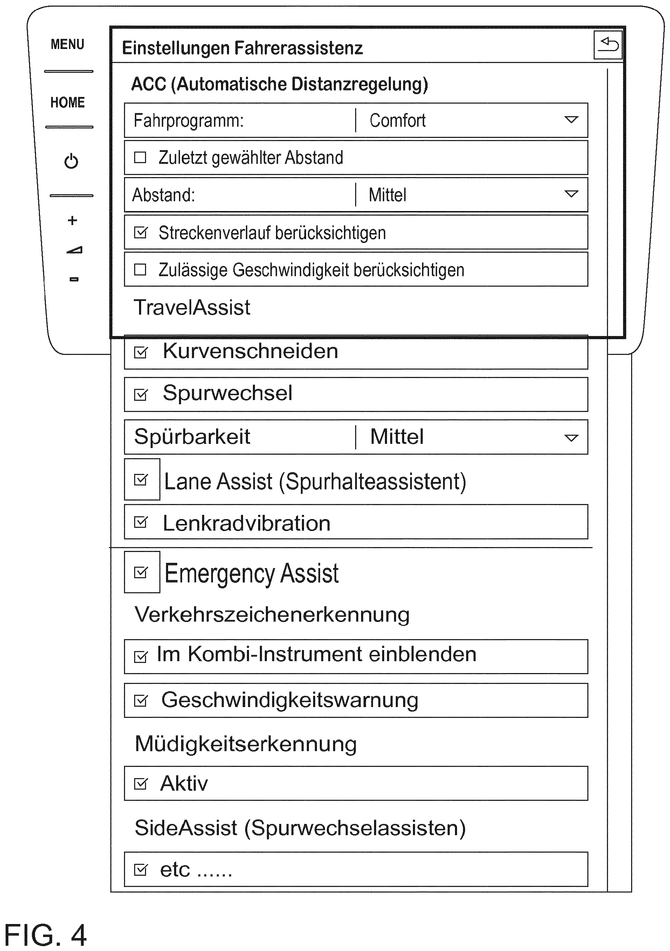

Im ersten Ausführungsbeispiel wird das Bedienmenü "Einstellungen Fahrerassistenz" individuell angepasst. Das geschieht in Abhängigkeit des Verhaltens des Fahrers. Der Fahrer hat initial ein Einstellungsmenü für die Fahrerassistenzsysteme, welches wie in Fig. 4 aussieht. In Fig. 4 ist die Ausgangslage gezeigt. Das Einstellmenü für die automatische Distanzregelung ACC, entsprechend Adaptive Cruise Control, umfasst Einstellmöglichkeiten für das Fahrprogramm: "Zuletzt gewählter Abstand" und Abstand mit den Optionen "Streckenverlauf berücksichtigen" und "Zulässige Geschwindigkeit berücksichtigen".

Im Bereich TravelAssist umfasst das Einstellmenü Einstellmöglichkeiten für die Optionen Kurvenschneiden, Spurwechsel, Lane Assist und Lenkradvibration für ein haptisches Feedback. Des Weiteren ist eine Komfort-Einstellmöglichkeit für die Spürbarkeit der Korrektureingriffe des TravelAssist-Assistenzsystems vorhanden. Es gibt weitere Optionen für Emergency Assist, im Bereich Verkehrszeichenerkennung die Optionen Im KombiInstrument einblenden und Geschwindigkeitswarnung, für die Müdigkeitserkennung die Option Aktiv und weitere Optionen für den Spurwechselassistenten. Die Liste der Einstellmöglichkeiten kann noch deutlich länger sein als dargestellt. Dabei wird durch die Umrandung der auf der Anzeigeeinheit sichtbare Bereich angedeutet. Die anderen Einträge sind nur durch einen Scroll-Vorgang zu erreichen.

Es muss beispielsweise recht weit nach unten gescrollt werden, um an die Option für die Aktivierung/Deaktivierung der Müdigkeits-Erkennung zu kommen. Wenn der Fahrer diesen Einstellvorgang während der Fahrt vornimmt, kann der lange Scroll-Vorgang deutlich mehr vom Fahrgeschehen ablenken.

Wenn der Fahrer eine Einstellung in dem Bedienmenü vornimmt, wird die Verwendung dieser Einstellfunktion in dem Speicher 40 in einer eigens dafür vorgesehenen Statistik eingetragen. In dieser Statistik wird einfach die Häufigkeit der Benutzung dieser Einstellmöglichkeit festgehalten. Zusätzlich können in einer anderen Ausführungsform auch die jeweils eingestellten Werte festgehalten werden. Dabei kann die Identifikation des Fahrers mit Hilfe des Schüssels erfolgen, den der Fahrer benutzt. Die Statistik kann in Form der folgenden Tabelle in Speicher 40 abgespeichert werden:

| Einstellparameter | Häufigkeit der Benutzung | Einstellwert |
|---|---|---|
| Fahrprogramm | 5 | Comfort |
| Zuletzt gewählter Abstand | 0 | |
| Abstand | 0 | |
| Streckenverlauf berücksichtigen | 0 | |
| Zulässige Geschwindigkeit berücksichtigen | 0 | |
| Kurven Schneiden | 3 | |
| Spurwechsel | 3 | |
| Spürbarkeit | 0 | |
| Lane Assist | 0 | |
| Lenkradvibration | 0 | |
| Emergency Assist | 0 | |
| Im Kombiinstrument einblenden | 0 | |
| Geschwindigkeitswarnung | 0 | |
| Müdigkeitserkennung | 2 | Aktiv |
| SideAssist | 0 | |
| ... | | |

Die Tabelle ist in Fig. 2 mit Bezugszahl 61 versehen. Diese Statistik wird von Zeit zu Zeit, z.B. einmal pro Monat, an den Backend-Server 18 des Kfz-Herstellers zur dortigen Auswertung übertragen. Dies kann OTA, entsprechend Over The Air, erfolgen mit Hilfe des Kommunikationsmoduls 160.

Bei der Auswertung der Daten im Backend-Server 18 wird durch die Analyse-Software, die auf dem Backend-Server 18 installiert ist, festgestellt, dass der Fahrer die Einstellung "Fahrprogramm" für den Fahrerassistenten ACC, "Kurvenschneiden" und "Spurwechsel" für den Fahrerassistenten TravelAssist und die Müdigkeitserkennung oft verstellt hat, hingegen die restlichen Einstellmöglichkeiten nicht verstellt hat.

Daraufhin wird auf dem Backend-Server 18 ein Software-Update erstellt, bei dem das Einstellmenü individuell auf diesen Fahrer abgestimmt angepasst wird. Die neue Version der angepassten Software wird ebenfalls Over The Air an das Fahrzeug übertragen und dort installiert.

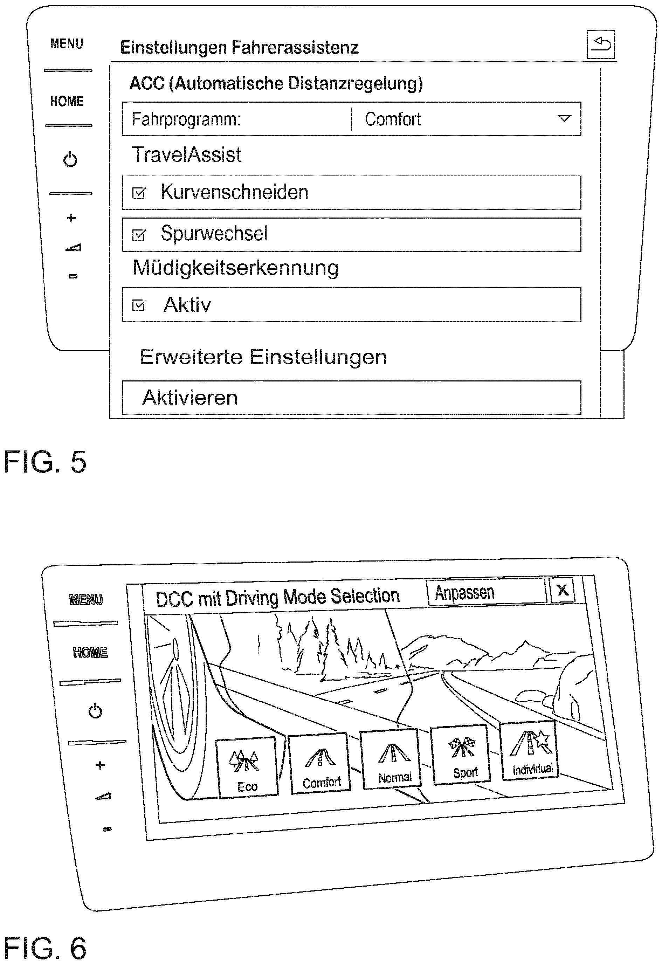

Nach dem Update sieht das Einstellungsmenü so aus, wie in Fig. 5 dargestellt. Die oft verwendeten Einstell-Möglichkeiten und Optionen sind nach Häufigkeit der Bedienung sortiert worden. Auch sind die nicht benutzten Einstellungsmöglichkeiten / -optionen in ein Untermenü versteckt worden. Diese Einstellungen können im neuen Untermenü "Erweiterte Einstellungen" aufgerufen werden und dort verstellt werden.

Im Folgenden wird noch ein weiteres Ausführungsbeispiel erläutert. Dieses Beispiel bezieht sich auf Einstellungen bei dem Fahrerassistenten DCC zur Fahrwerkseinstellung, s. Fig. 6. Der Fahrer verstellt je nach Fahrsituation (Bundestrasse, Stadt, Autobahn, Regen, Abends (Arbeitsweg), Wochenende (Entspannte Wochenendreise, usw.)) im Bedienmenü "DCC mit Driving Mode Selection" die Einstellung für die Fahreigenschaften. Zur Auswahl stehen die Fahreigenschaften Eco, Comfort, Normal, Sport und Individual.

Wenn der Fahrer eine Einstellung in dem Bedienmenü vornimmt, wird die Verwendung dieser Einstellfunktion wiederum in dem Speicher 40 in einer eigens dafür vorgesehenen Statistik eingetragen. In dieser Statistik wird nicht nur die Häufigkeit der Benutzung dieser Einstellmöglichkeit festgehalten, sondern es wird auch registriert in welcher Fahrsituation der Fahrer welche Fahrwerkseinstellung bevorzugt. Dabei kann auch eine Zusatzeinstellung berücksichtigt werden, die der Fahrer zusätzlich verändert. Die Statistik kann in Form der folgenden Tabelle in Speicher 40 abgespeichert werden:

| Fahrsituation | Häufigkeit | DCC-Mode | Zusatzeinstellung |
|---|---|---|---|
| Bundesstraße | 10 | Comfort | |
| Stadtverkehr | 8 | Normal | |
| Autobahn | 5 | Sport | |
| Regen | 2 | Eco | |
| Stau | 1 | Comfort | ACC-Abstand Gering |
| Arbeit | 20 | Sport | |
| Wochenende | 4 | Eco | |

Die Tabelle 61 wird wiederum nach einer Nutzungszeit, z.B. einmal pro Monat, zum Backend-Server 18 übertragen. Durch die Auswertung im Backend-Server 18 stellt der Auswerte-Algorithmus bestimmte Abhängigkeiten / Gewohnheiten des Fahrers fest, wie bspw.: Wenn das Fahrzeug auf einer Landstraße fährt, wird immer der Modus "Comfort" eingestellt. Wenn das Fahrzeug in der Stadt unterwegs ist, wird immer auf "Normal"-Modus umgestellt. Wenn das Fahrzeug sich im Stau befindet, wird der Modus "Sport" eingestellt. Dabei wird gleichzeitig die kleinste Abstands-Zeitlücke bei den Einstellungen für den Fahrerassistenten ACC eingestellt. Diese Gewohnheiten des Fahrers werden genutzt, um ein individuell auf den Fahrer zugeschnittenes Software-Update zu erstellen. Dieses Software-Update wird ebenfalls "Over The Air" zum Fahrzeug 10 übertragen und dort installiert.

Durch die angepasste Software werden die bevorzugten Einstellungen automatisch für das Fahrzeug 10 eingestellt, sobald die erlernten Bedingungen erfüllt sind. D.h., sobald das Fahrzeug 10 auf eine Landstraße abbiegt, wird automatisch für den DCC-Fahrerassistenten 184 der Mode "Comfort" eingestellt. Auch die anderen Einstellungen für Stadtverkehr, Autobahn etc. werden so automatisch eingestellt. Das Navigationssystem 130 überwacht die gefahrene Strecke und darauf kann das Fahrerassistenzsystem DCC 184 von Zeit zu Zeit über das Fahrzeug-Kommunikationsnetzwerk zugreifen, um die passende Einstellung automatisch zu wählen.

Alle hierin erwähnten Beispiele wie auch bedingte Formulierungen sind ohne Einschränkung auf solche speziell angeführten Beispiele zu verstehen. So wird es zum Beispiel von

Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste

- 10: Fahrzeug
- 12: Mobilfunk-Basisstation
- 14: Evolved Packet Core
- 16: Internet
- 18: Verwaltungseinheit
- 20: berührungsempfindliche Anzeigeeinheit
- 30: Gateway
- 40: Recheneinheit
- 50: Eingabeeinheit
- 60: Speichereinheit
- 61: Statistik
- 70: Datenleitung zur Anzeigeeinheit
- 80: Datenleitung zur Speichereinheit
- 90: Datenleitung zur Eingabeeinheit
- 100: 1. Datenbus
- 102: 2. Datenbus
- 104: 3. Datenbus
- 106: 4. Datenbus
- 110: Kombiinstrument
- 120: Telefon
- 130: Navigationsgerät
- 140: Radio
- 150: Kamera
- 160: Kommunikationsmodul
- 172: Motorsteuergerät
- 174: ESP-Steuergerät
- 176: Getriebe-Steuergerät
- 182: Abstandsregelungs-Steuergerät
- 184: Fahrwerk-Steuergerät
- 190: On-Board Diagnosestecker

## Patentansprüche

1. Verfahren zur Anpassung der Bedienung eines Fahrzeugsteuerungssystems, wobei die Bedienung durch ein oder mehrere Bedienmenüs einer Benutzerschnittstelle erfolgt, die auf einer Anzeigeeinheit (20) dargestellt werden, wobei eine Statistik (61) aufgestellt wird, welche Bedienmenüeinstellungen der Fahrer wenigstens in einer bestimmten Zeit vorgenommen hat, wobei in der Statistik (61) außer der Häufigkeit der Benutzung auch erfasst wird, welche Bedienmenüpunkt-Einstellungswerte der Fahrer gewählt hat, wobei zusätzlich auch die Fahrsituation erfasst wird, in der der Fahrer die Bedienmenüpunkt-Einstellung vorgenommen hat, wobei die Statistik (61) in einer Speichereinheit (60) des Fahrzeuges (10) abgespeichert wird, wobei die Statistik (61) zu einer externen Verwaltungseinheit (18) übertragen wird, wobei die Statistik (61) in der externen Verwaltungseinheit (18) ausgewertet wird, und in Abhängigkeit davon ein individuell auf die Bedürfnisse des Fahrers angepasstes Software-Update für ein Programm des Fahrzeugsteuerungssystems (182, 184) erstellt wird, welches an das Fahrzeug (10) übertragen wird und in dem Fahrzeug (10) installiert wird, wobei durch die individuelle Anpassung das über die Statistik (61) erfasste Verhalten des Fahrers gelernt wird, so dass die gelernten Bedienmenüpunkt-Einstellungen des Fahrers bei den betreffenden Fahrsituationen zukünftig automatisch gewählt werden, ohne dass der Fahrer diese Bedienmenüpunkt-Einstellungen selbst auswählen muss.

2. Verfahren nach Anspruch 1, wobei durch die individuelle Anpassung die Anordnung der Bedienmenüeinstellungspunkte verändert wird, derart, dass Bedienmenüpunkte die der Fahrer laut Statistik (61) häufig benutzt hat, im Bedienmenü an leichter zugänglicher Stelle positioniert werden, während wenig oder gar nicht benutzte Bedienmenüeinstellungspunkte an schlechter zugänglicher Stelle positioniert werden.

3. Verfahren nach Anspruch 2, wobei die an schlechter zugänglicher Stelle positionierten Bedienmenüpunkte in einem Untermenü positioniert werden.

4. Vorrichtung zur Verwendung bei dem Verfahren nach einem der vorhergehenden Ansprüche, aufweisend eine Anzeigeeinheit (20), weiter aufweisend eine Recheneinheit (40) mit einer Speichereinheit (60), wenigstens ein Fahrzeugsteuerungssystem, (182, 184) und ein Kommunikationsmodul (160), wobei die Recheneinheit (40) ausgelegt ist die Fahrereinstellungen bzgl. des wenigstens einen Fahrzeugsteuerungssystems (182, 184) in einer Statistik (61) zu erfassen und in der Speichereinheit (60) zu speichern, wobei in der Statistik (61) außer der Häufigkeit der Benutzung auch erfasst wird, welche Bedienmenüpunkt-Einstellungswerte der Fahrer gewählt hat, wobei zusätzlich auch die Fahrsituation erfasst wird, in der der Fahrer die Bedienmenüpunkt-Einstellung vorgenommen hat, und, dass die Recheneinheit (40) weiter so ausgelegt ist, die Statistik (61) über das Kommunikationsmodul (160) zu einer externen Verwaltungseinheit (18) zu senden und von dort ein an die übertragene Statistik (61) angepasstes Software-Update zu empfangen, und auf der Recheneinheit (40) zu installieren, wobei durch die individuelle Anpassung das über die Statistik (61) erfasste Verhalten des Fahrers gelernt wird, so dass die gelernten Bedienmenüpunkt-Einstellungen des Fahrers bei den betreffenden Fahrsituationen zukünftig automatisch gewählt werden, ohne dass der Fahrer diese Bedienmenüpunkt-Einstellungen selbst auswählen muss.

5. Vorrichtung nach Anspruch 4, wobei die Recheneinheit (40) programmierbar ausgelegt ist, wobei der Zeitraum für die Erfassung der Statistik (61) programmierbar ist.

6. Vorrichtung nach Anspruch 4 oder 5, wobei die Anzeigeeinheit (20) eine berührungsempfindliche Anzeigeeinheit ist über die die Einstellungen in den Bedienmenüs vorgenommen werden können.

7. Kraftfahrzeug, **dadurch gekennzeichnet, dass** das Kraftfahrzeug (10) eine Vorrichtung nach einem der Ansprüche 4 bis 6 aufweist.

8. Computerprogramm, **dadurch gekennzeichnet, dass** das Computerprogramm ausgelegt ist, bei Abarbeitung in einer Recheneinheit (40) die Schritte des Verfahrens nach einem der Ansprüche 1 bis 3 durchzuführen, die von der Vorrichtung nach einem der Ansprüche 4 bis 6 durchgeführt werden.

## Claims

1. A method for adapting the operation of a vehicle control system, wherein the operation takes place via one or more operating menus of a user interface which are displayed on a display unit (20), wherein a statistic (61) is compiled as to which operating menu settings the driver has performed at least within a defined time period; wherein in the statistic (61), apart from the frequency of use, it is also recorded which operating menu item setting values the driver has selected; wherein the driving situation in which the driver performed the operating menu item setting is additionally also recorded; wherein the statistic (61) is stored in a memory unit (60) of the vehicle (10); wherein the statistic (61) is transmitted to an external management unit (18); wherein the statistic (61) is evaluated in the external management unit (18), and depending thereon a software update, individually adapted to the needs of the driver, for a program of the vehicle control system (182, 184) is created, which update is transmitted to the vehicle (10) and installed in said vehicle (10); wherein the behavior of the driver as recorded via the statistic (61) is learned via the individual adaptation so that the learned operating menu item settings of the driver are selected automatically in the future in the relevant driving situations without the driver themselves needing to select these operating menu item settings.

2. The method according to Claim 1, wherein the arrangement of the operating menu setting items is modified via the individual adaptation in such a way that operating menu items that the driver has frequently used, according to statistic (61), are positioned at a more easily accessible location in the operating menu, whereas operating menu setting items that are used little or not at all are positioned at a less accessible location.

3. The method according to Claim 2, wherein the operating menu items positioned at a less accessible location are positioned in a submenu.

4. A device for use in the method according to one of the preceding claims, comprising a display unit (20); further comprising a computing unit (40) with a memory unit (60), at least one vehicle control system (182, 184), and a communication module (160); wherein the computing unit (40) is designed to record the driver settings with respect to the at least one vehicle control system (182, 184) in a statistic (61) and to store them in the memory unit (60); wherein in the statistic (61), apart from the frequency of use, it is also recorded which operating menu item setting values the driver has selected; wherein the driving situation in which the driver performed the operating menu item setting is additionally also recorded; and in that the computing unit (40) is further designed to transmit the statistic (61) to an external management unit (18) via the communication module (160), and to receive therefrom a software update adapted to the transmitted statistic (61) and to install said software update in the computing unit (40); wherein the behavior of the driver as recorded via the statistic (61) is learned via the individual adaptation so that the learned operating menu item settings of the driver are selected automatically in the future in the relevant driving situations without the driver themselves needing to select these operating menu item settings.

5. The device according to Claim 4, wherein the computing unit (40) is designed to be programmable, wherein the time period for the recording of the statistic (61) is programmable.

6. The device according to Claim 4 or 5, wherein the display unit (20) is a touch-sensitive display unit via which the settings can be performed in the operating menus.

7. A motor vehicle, **characterized in that** the motor vehicle (10) comprises a device according to one of Claims 4 to 6.

8. A computer program, **characterized in that** when executed in a computing unit (40), the computer program is designed to carry out the steps of the method according to one of Claims 1 to 3, which are carried out by the device according to one of Claims 4 to 6.

## Revendications

1. Procédé pour adapter le fonctionnement d'un système de commande de véhicule, dans lequel le fonctionnement est effectué par le biais d'un ou plusieurs menus de fonctionnement d'une interface utilisateur, qui est représentée sur une unité d'affichage (20), dans lequel une statistique (61) est établie, sur les réglages de menu de fonctionnement que le conducteur a effectué au moins dans un temps donné, dans lequel, dans la statistique (61), sont détectées, en dehors de la fréquence de l'utilisation, les valeurs de réglage de point de menu de fonctionnement que le conducteur a choisies, dans lequel en outre la situation de conduite, dans laquelle le conducteur a effectué le réglage de point de menu de fonctionnement, est également détectée, dans lequel la statistique (61) est mémorisée dans une unité de mémoire (60) du véhicule (10), dans lequel la statistique (61) est transmise à une unité de gestion externe (18), dans lequel la statistique (61) est évaluée dans l'unité de gestion externe (18) et, en fonction de cela, une mise à jour logicielle pour un programme du système de commande de véhicule (182, 184) adaptée individuellement aux besoins du conducteur est créée, qui est transmise au véhicule (10) et est installée dans le véhicule (10), dans lequel le comportement du conducteur détecté par le biais de la statistique (61) est appris par l'adaptation individuelle, de sorte que les réglages appris de point de menu de fonctionnement du conducteur soient automatiquement choisis à l'avenir lors des situations de conduite concernées, sans que le conducteur ait besoin de choisir lui-même ces réglages de point de menu de fonctionnement.

2. Procédé selon la revendication 1, dans lequel l'agencement des points de réglage de menu de fonctionnement est modifié par l'adaptation individuelle, de sorte que les points de menu de fonctionnement que le conducteur a souvent utilisés selon la statistique (61) soient positionnés dans le menu de fonctionnement à un endroit plus facile d'accès, tandis que les points de réglage de menu de fonctionnement peu ou pas du tout utilisés sont positionnés à un endroit plus difficile d'accès.

3. Procédé selon la revendication 2, dans lequel les points de menu de fonctionnement positionnés à l'endroit plus difficile d'accès sont positionnés dans un sous-menu.

4. Dispositif d'utilisation dans le procédé selon l'une quelconque des revendications précédentes, présentant une unité d'affichage (20), présentant en outre une unité de calcul (40) avec une unité de mémoire (60), au moins un système de commande de véhicule (182, 184) et un module de communication (160), dans lequel l'unité de calcul (40) est conçue pour détecter les réglages du conducteur concernant l'au moins un système de commande de véhicule (182, 184) dans une statistique (61) et les mémoriser dans l'unité de mémoire (60), dans lequel dans la statistique (61) en dehors de la fréquence de l'utilisation, il est également détecté les valeurs de réglage de point de menu de fonctionnement que le conducteur a choisies, dans lequel en outre la situation de conduite, dans laquelle le conducteur a effectué le réglage de point de menu de fonctionnement, est également détectée et en ce que l'unité de calcul (40) est en outre conçue pour envoyer la statistique (61) par le biais du module de communication (160) à une unité de gestion externe (18) et pour recevoir, de celle-ci, une mise à jour logicielle adaptée à la statistique (61) transmise et pour l'installer sur l'unité de calcul (40), dans lequel par l'adaptation individuelle, le comportement du conducteur détecté par le biais de la statistique (61) est appris, de sorte que les réglages appris de point de menu de fonctionnement du conducteur soient automatiquement choisis à l'avenir lors de situations de conduite concernées, sans que le conducteur doive choisir lui-même ces réglages de point de menu de fonctionnement.

5. Dispositif selon la revendication 4, dans lequel l'unité de calcul (40) est conçue programmable, dans lequel la période pour la détection de la statistique (61) est programmable.

6. Dispositif selon la revendication 4 ou 5, dans lequel l'unité d'affichage (20) est une unité d'affichage tactile par le biais de laquelle les réglages dans les menus de fonctionnement peuvent être effectués.

7. Véhicule automobile, **caractérisé en ce que** le véhicule automobile (10) présente un dispositif selon l'une quelconque des revendications 4 à 6.

8. Programme informatique, **caractérisé en ce que** le programme informatique est conçu, lors de l'exécution dans une unité de calcul (40), pour réaliser les étapes du procédé selon l'une quelconque des revendications 1 à 3, qui sont réalisées par le dispositif selon l'une quelconque des revendications 4 à 6.
